# EUROPEAN PATENT APPLICATION

(11) **EP 4 432 710 A1**
(43) Date of publication of application: **18.09.2024**
(21) Application number: 22892373.6
(22) Date of filing: 26.08.2022
(51) Int. Cl.: H04W 8/22, H04W 48/08, H04W 48/18, H04W 48/20, H04W 72/0453

(54) **USER EQUIPMENT, CONTROL METHOD, RECORDING MEDIUM, AND COMMUNICATION SYSTEM**

(30) Priority: 11.11.2021 JP 2021184318
(71) Applicant: NEC Corporation, 108-8001 Tokyo (JP)
(72) Inventor: HAYASHI, Satoaki, 1088001 Tokyo (JP)
(74) Representative: MacDougall, Alan John Shaw
(86) International application number: PCT/JP2022/032268
(87) International publication number: WO 2023/084870

(57) **Abstract**

A user apparatus can appropriately operate. A user apparatus (100A, 1430) includes a reception section (331, 1431) that receives bandwidth information from a first base station and a second base station, and a selection section (333, 1432) that selects one of a first mode and a second mode as an operation mode by using the bandwidth information. The first mode is a mode in which a capability of the user apparatus is limited compared to a capability of a first other user apparatus connecting to the first base station. The second mode is a mode in which the capability of the user apparatus is not limited compared to a capability of a second other user apparatus connecting to the second base station.

## Description

### Technical Field

The present disclosure relates to a user apparatus, a control method, a recording medium, and a communication system.

### Background Art

In technical standards of the 3rd Generation Partnership Project (3GPP), technical study on New Radio technology (NR) is conducted. For example, in a cellular system of the 5th Generation (5G), three scenarios are studied as assumed scenarios, which are enhanced Mobile BroadBand (eMBB), Ultra-Reliable and Low Latency Communication (URLLC), and massive Machine Type Communication (mMTC).

Furthermore, in 3GPP Release 17, a device assuming applications such as an industrial wireless sensor, video surveillance, and a wearable device is studied (for example, NPL 1). Such a device is a device having a limited capability, and is hence referred to as a "Reduced Capability device". For the sake of convenience, the device is hereinafter referred to as a "first device (or a RedCap device)".

Note that a normal device not being the first device is referred to as a "non-Reduced Capability device". For the sake of convenience, the device is hereinafter referred to as a "second device (or a non-RedCap device)".

For example, NPL 2, NPL 3, and NPL 4 describe operations of the first device.

### Citation List

### Non Patent Literature

[NPL 1] RP-211574, "Revised WID on support of reduced capability NR devices", Ericsson, June, 2021
[NPL 2] R2-2105137, "Power-saving aspects from cell access and camping of RedCap UEs", Apple, May, 2021
[NPL 3] R2-2109446, "Support for fallback operation for RedCap UEs", Qualcomm, November, 2021
[NPL 4] R2-2109494, "Discussion on early identification and access restrictions", OPPO, November, 2021
[NPL 5] 3GPP TS 38.304 V16.6.0 (2021-09)
[NPL 6] R2-2108928, "LS on Slice list and priority information for cell reselection", RAN2, August, 2021
[NPL 7] 3GPP TR 22.832 V17.4.0 (2021-03)
[NPL 8] 3GPP TS 22.104 V18.2.0 (2021-09)
[NPL 9] 3GPP TR 22.804 V16.3.0 (2020-07)

### SUMMARY

### Technical Problem

Discussion on operations of the first device has been started, and an issue is how the first device operates in some situations.

In view of the circumstances described above, the present disclosure provides a technique with which the first device (RedCap device) can appropriately operate.

### Solution to Problem

In one or more example embodiments, a user apparatus is provided. The user apparatus includes reception means for receiving bandwidth information being information related to a bandwidth, from a first base station and a second base station, and selection means for selecting one of a first mode and a second mode as an operation mode by using the bandwidth information. The first mode is a mode in which a capability of the user apparatus is limited compared to a capability of a first other user apparatus connecting to the first base station. The second mode is a mode in which the capability of the user apparatus is not limited compared to a capability of a second other user apparatus connecting to the second base station.

In one or more example embodiments, a control method in a user apparatus is provided. The control method includes receiving bandwidth information being information related to a bandwidth, from a first base station and a second base station, and selecting one of a first mode and a second mode as an operation mode by using the bandwidth information. The first mode is a mode in which a capability of the user apparatus is limited compared to a capability of a first other user apparatus connecting to the first base station. The second mode is a mode in which the capability of the user apparatus is not limited compared to a capability of a second other user apparatus connecting to the second base station.

In one or more example embodiments, a non-transitory computer-readable recording medium having recorded thereon storing a program is provided. The program causes at least one processor equipped in a user apparatus to execute receiving bandwidth information being information related to a bandwidth, from a first base station and a second base station, and selecting one of a first mode and a second mode as an operation mode by using the bandwidth information. The first mode is a mode in which a capability of the user apparatus is limited compared to a capability of a first other user apparatus connecting to the first base station. The second mode is a mode in which the capability of the user apparatus is not limited compared to a capability of a second other user apparatus connecting to the second base station.

In one or more example embodiments, a communication system is provided. The communication system includes a first base station and a second base station each configured to transmit bandwidth information being information related to a bandwidth, and a user apparatus configured to receive the bandwidth information from the first base station and the second base station, and select one of a first mode and a second mode as an operation mode by using the bandwidth information. The first mode is a mode in which a capability of the user apparatus is limited compared to a capability of a first other user apparatus connecting to the first base station. The second mode is a mode in which the capability of the user apparatus is not limited compared to a capability of a second other user apparatus connecting to the second base station. Advantageous Effects of Invention

According to the configuration described above, the user apparatus (for example, the RedCap device) can appropriately operate. Problems, configurations, and effects other than those described above become apparent in the following description of the example embodiments.

### BRIEF DESCRIPTION OF THE DRAWINGS

Fig. 1 is a diagram illustrating an example of a configuration of a system;
Fig. 2 is a diagram illustrating an example of a configuration of a first base station according to a first example embodiment;
Fig. 3 is a diagram illustrating an example of a configuration of a second base station according to the first example embodiment;
Fig. 4 is a diagram illustrating an example of a configuration of a first user equipment according to the first example embodiment;
Fig. 5 is a diagram conceptually illustrating an example of a configuration of network slice information according to the first example embodiment;
Fig. 6 is a diagram conceptually illustrating an example of a configuration of cell information according to the first example embodiment;
Fig. 7 is a diagram conceptually illustrating an example of a configuration of network slice priority information according to the first example embodiment;
Fig. 8 is a mathematical expression related to a relaxed measurement criterion;
Fig. 9 is a flowchart illustrating a flow of processing of the first user equipment according to the first example embodiment;
Fig. 10 is a flowchart illustrating an example alteration of the flow of processing of the first user equipment according to the first example embodiment;
Fig. 11 is a diagram illustrating an example of a configuration of a second user equipment according to a second example embodiment;
Fig. 12 is a flowchart illustrating a flow of processing of the second user equipment according to the second example embodiment;
Fig. 13 is a flowchart illustrating an example alteration of the flow of processing of the second user equipment according to the second example embodiment;
Fig. 14 is a diagram illustrating an example of a configuration of a system according to a third example embodiment; and
Fig. 15 is a flowchart illustrating a flow of processing of a user equipment according to the third example embodiment.

### DESCRIPTION OF THE EXAMPLE EMBODIMENTS

One or more example embodiments will be described below with reference to the accompanying drawings. Note that, in the Specification and drawings, elements to which similar descriptions are applicable are denoted by the same reference signs, and overlapping descriptions are hence omitted.

Descriptions will be given in the following order.
1. Related Art
2. Overview of Example Embodiments
3. First Example Embodiment
   3-1. Configuration of System
   3-2. Configuration of First Radio Communication System
   3-3. Configuration of Second Radio Communication System
   3-4. Configuration of First User Equipment
   3-5. Operation Example of First User Equipment
   3-6. Flow of Processing of First User Equipment
   3-7. Effects
   3-8. Example Alterations
4. Second Example Embodiment
   4-1. Configuration of Second User Equipment
   4-2. Flow of Processing of Second User Equipment
   4-3. Effects
   4-4. Example Alterations
5. Third Example Embodiment
   5-1. Configuration of System
   5-2. Configuration of User Equipment
   5-3. Flow of Processing of User Equipment
6. Other Example Embodiments

### <<1. Related Art>>

As a technique related to example embodiments to be described below, a first device will be described.

As frequency bands of 5G, three frequency bands are allocated, which are a 3.7 GHz band, a 4.5 GHz band, and a 28 GHz band. These three frequency bands are allocated as a Time Division Duplex (TDD) carrier band.

For example, in the 3.7 GHz band, a maximum bandwidth (a so-called system bandwidth) used for communication between a second device (non-RedCap device) and a base station is 100 MHz. On the other hand, a maximum bandwidth used (supported) by a first device (RedCap device) is smaller than 100 MHz. For example, the maximum bandwidth supported by the first device is 20 MHz.

Note that a capability limited in the first device is not limited to such a bandwidth described above. For example, the capability may include performance of the device, components of the device, a communication scheme supported by the device, and the like. For example, the number of transmit (Tx) and receive (Rx) antennas of the first device may be smaller than the number of antennas of the second device. For example, the number of transmit and receive antennas of the first device is 1 to 2. Furthermore, the first device may not support a part of functions (for example, carrier aggregation (CA)) provided in the second device.

### «2. Overview of Example Embodiments»

An overview of one or more example embodiments to be described below will be described.

### (1) Technical Problem

In addition to the frequency band of 5G described above, a frequency band of Long Term Evolution (LTE) of the 4th Generation (4G) is reused for 5G. Such a reused frequency band is referred to as an "LTE-refarming band", and is allocated as a Frequency Division Duplex (FDD) carrier band. The LTE-refarming band is the same as an existing frequency band of LTE, and includes, for example, a 700 MHz band, an 800 MHz band, a 900 MHz band, a 1.5 GHz band, a 1.7 GHz band, a 2 GHz band, and the like. Thus, a User Equipment (UE) can use wide frequencies from the LTE-refarming band to the frequency band of 5G.

It is assumed that the user equipment that operates as the first device does not support carrier aggregation (CA) but individually operates in the Time Division Duplex (TDD) carrier band and the FDD carrier band. For example, at a certain time point, the user equipment performs communication operation in the TDD carrier band. At another time point, the user equipment performs communication operation in the FDD carrier band. Here, as described above, the maximum bandwidth supported by the first device is 20 MHz. On the other hand, the maximum bandwidth (the so-called system bandwidth) used in the FDD carrier band is also 20 MHz. From the perspective of the base station that communicates with the user equipment in the FDD carrier band, the bandwidth used for communication with the user equipment is not limited, and thus the user equipment behaves (performs behaviors) as the second device in appearance.

In the configuration as described above, an issue is how the user equipment selects (switches between) operation in the TDD carrier band and operation in the FDD carrier band.

### (2) Technical Features

In one or more example embodiments, a user equipment is provided. The user equipment includes a reception section and a selection section.

The reception section receives bandwidth information being information related to a bandwidth from a first base station and a second base station. The selection section selects one of a first mode and a second mode as an operation mode by using the bandwidth information. The first mode is a mode in which a capability of the user equipment is limited compared to a capability of a first other user equipment connecting to the first base station. The second mode is a mode in which the capability of the user equipment is not limited compared to a capability of a second other user equipment connecting to the second base station.

According to the configuration described above, the user equipment can appropriately select the operation mode. Note that the technical features of one or more example embodiments described below are not limited to the technical features described above. Furthermore, one or more example embodiments may provide other effects instead of or in addition to the effects described above.

### <<3. First Example Embodiment>>

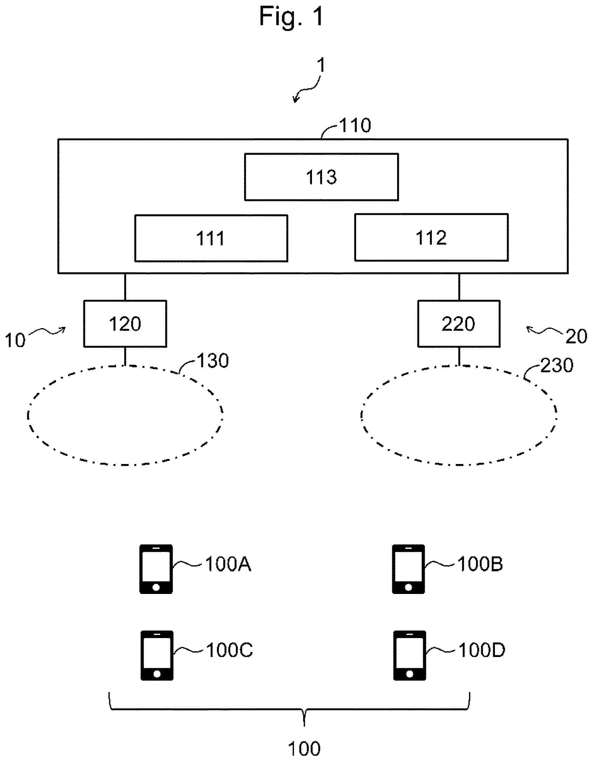

Next, with reference to Fig. 1 to Fig. 10, a first example embodiment and example alterations thereof will be described.

### <3-1. Configuration of System>

Fig. 1 is a diagram illustrating an example of a configuration of a system 1. The system 1 includes one or more first radio communication systems 10 and one or more second radio communication systems 20. Note that, for the sake of simplicity of the drawings, Fig. 1 illustrates one first radio communication system 10 and one second radio communication system 20.

Furthermore, the system 1 includes user equipments 100. The user equipments 100 include a first user equipment 100A, a second user equipment 100B, a third user equipment 100C, and a fourth user equipment 100D. The user equipment is hereinafter simply referred to as a "UE".

The first radio communication system 10 is a system in conformity to Technical Specifications (TSs) of 3GPP. Specifically, the first radio communication system 10 may be a 5G system. The second radio communication system 20 is a system in conformity to technical specifications of 3GPP. Specifically, the second radio communication system 20 may be a system refarmed from 4G to 5G. As a matter of course, the configuration of the system 1 is not limited to the example.

### <3-2. Configuration of First Radio Communication System>

The first radio communication system 10 includes a core network 110 and a first base station 120.

### (1) Configuration of Core Network

The core network 110 is a network for forwarding communication from a Radio Access Network (RAN) to another network. For example, the core network 110 is a core network in conformity to technical specifications of 3GPP. Specifically, the core network 110 may be a 5G Core Network (5GC).

The core network 110 may include one or more partial networks. The partial network may be a logically configured network, or may be a physically configured network.

In the present example, the core network 110 includes a plurality of network slices 111 and 112. The network slices 111 and 112 are virtual (logical) networks configured by virtually (logically) separating equipment and functionality in the core network 110. The network slices 111 and 112 may have network features different from each other.

Each of the network slices may be identified with Network Slice Selection Assistance information (NSSAI). The NSSAI is information for identifying the network slice in the 5G system. The NSSAI is a set of one or more Single-NSSAIs (S-NSSAIs). For example, each S-NSSAI includes a "service type", a "slice type", a "slice differentiator", and the like.

Note that, although Fig. 1 illustrates two network slices 111 and 112 in the core network 110, the number of network slices is not limited to the example.

Furthermore, the core network 110 includes one or more network nodes 113. The network node(s) 113 may be included in a specific network slice. The network node 113 has a predetermined function for the UE 100 to use the core network 110. The one or more network nodes 113 may be Network Function(s) (NF(s)) of the 5G system. The NF may include Access and Mobility Management Function (AMF), Session Management Function (SMF), Network Slice Selection Function (NSSF), Unified Data Management (UDM), and the like. Note that a part or all of the core network 110 may be configured using Network Function Virtualization (NFV) technology.

### (2) Configuration of First Base Station

The first base station 120 is a node in a radio access network of the first radio communication system 10. The first base station 120 performs radio communication with the UE 100 located in a cell 130.

For example, the first base station 120 is a base station in conformity to technical specifications of 3GPP. The first base station 120 may be a base station of 5G/New Radio (NR). The first base station 120 may be a base station referred to as a generation Node B (gNB).

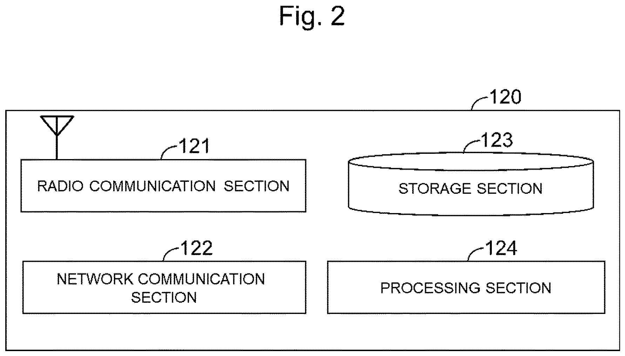

Fig. 2 is a diagram illustrating an example of a configuration of the first base station 120 according to the first example embodiment. The first base station 120 includes a radio communication section 121, a network communication section 122, a storage section 123, and a processing section 124.

The radio communication section 121 is an element that performs radio communication with the UE 100. The radio communication section 121 transmits a radio signal to the UE 100, and receives a radio signal from the UE 100. For example, the radio communication section 121 includes an antenna, a Radio Frequency (RF) circuit, and the like.

The network communication section 122 is an element that communicates with the core network 110 (in other words, one or more network nodes 113). The network communication section 122 transmits a signal to the core network 110, and receives a signal from the core network 110. For example, the network communication section 122 includes a network adapter, a network interface card, and the like.

The storage section 123 is an element that temporarily or permanently stores a program (instructions) and data used for performing various types of processing in the first base station 120. The storage section 123 includes a volatile memory and a non-volatile memory. The volatile memory may include a Random Access Memory (RAM), for example. The non-volatile memory may include one or more of a Read Only Memory (ROM), a Hard Disk Drive (HDD), and a Solid State Drive (SSD), for example.

The processing section 124 is an element that provides various functions of the first base station 120. The processing section 124 includes one or more processors. The one or more processors may include one or more of a Central Processing Unit (CPU), a Micro Processing Unit (MPU), and a micro controller, for example. The processing section 124 executes the program stored in the storage section 123, to thereby implement various functions of the first base station 120. The processing section 124 performs processing related to communication with the UE 100 and processing related to communication with the core network 110.

Note that the first base station 120 may include a plurality of units (or a plurality of nodes). The plurality of units may include a first unit (or a first node) that performs processing of a higher protocol layer and a second unit (or a second node) that performs processing of a lower protocol layer.

In the present example, the first base station 120 performs radio communication with the UE 100 in a first frequency band. The first frequency band is a frequency band of 5G. The first frequency band may be the TDD carrier band. The first frequency band may be the 3.7 GHz band, the 4.5 GHz band, or the 28 GHz band, for example. In the present example, the first frequency band is the 3.7 GHz band. The first frequency band is not limited to the example.

### <3-3. Configuration of Second Radio Communication System>

The second radio communication system 20 includes the core network 110 and a second base station 220. In other words, the second radio communication system 20 includes the core network 110 in common to the first radio communication system 10. Thus, description of the core network 110 will be omitted.

### (1) Configuration of Second Base Station

The second base station 220 is a node in a radio access network of the second radio communication system 20. The second base station 220 performs radio communication with the UE 100 located in a cell 230.

For example, the second base station 220 is a base station in conformity to technical specifications of 3GPP. The second base station 220 may be a base station of 5G/New Radio (NR). The second base station 220 may be a base station referred to as a generation Node B (gNB).

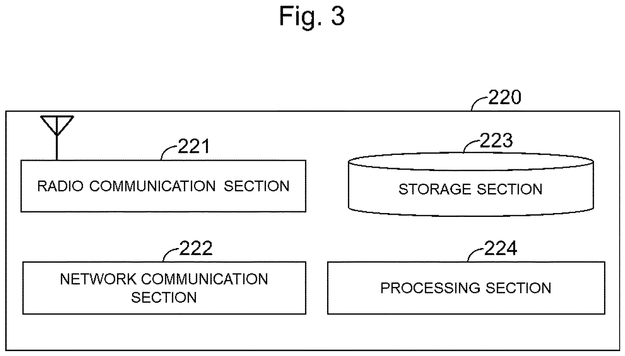

Fig. 3 is a diagram illustrating an example of a configuration of the second base station 220 according to the first example embodiment. The second base station 220 includes a radio communication section 221, a network communication section 222, a storage section 223, and a processing section 224.

The radio communication section 221 is an element that performs radio communication with the UE 100. The radio communication section 221 transmits a radio signal to the UE 100, and receives a radio signal from the UE 100. For example, the radio communication section 221 includes an antenna, an RF circuit, and the like.

The network communication section 222 is an element that communicates with the core network 110 (in other words, one or more network nodes 113). The network communication section 222 transmits a signal to the core network 110, and receives a signal from the core network 110. For example, the network communication section 222 includes a network adapter, a network interface card, and the like.

The storage section 223 is an element that temporarily or permanently stores a program (instructions) and data used for performing various types of processing in the second base station 220. The storage section 223 includes a volatile memory and a non-volatile memory. The volatile memory may include a RAM, for example. The non-volatile memory may include one or more of a ROM, an HDD, and an SSD, for example.

The processing section 224 is an element that provides various functions of the second base station 220. The processing section 224 includes one or more processors. The one or more processors may include one or more of a CPU, an MPU, and a micro controller, for example. The processing section 224 executes the program stored in the storage section 223, to thereby implement various functions of the second base station 220. The processing section 224 performs processing related to communication with the UE 100 and processing related to communication with the core network 110.

Note that the second base station 220 may include a plurality of units (or a plurality of nodes). The plurality of units may include a first unit (or a first node) that performs processing of a higher protocol layer and a second unit (or a second node) that performs processing of a lower protocol layer.

In the present example, the second base station 220 performs radio communication with the UE 100 in a second frequency band. The second frequency band may be a frequency band lower than the first frequency band. The second frequency band may be the FDD carrier band. The second frequency band is the "LTE-refarming band" described above. The second frequency band may be the 700 MHz band, the 800 MHz band, the 900 MHz band, the 1.5 GHz band, the 1.7 GHz band, or the 2 GHz band, for example. In the present example, the second frequency band is the 700 MHz band. The second frequency band is not limited to the example.

### <3-4. Configuration of First User Equipment>

### (1) First UE

The first UE 100A is a "Reduced Capability device". The "Reduced Capability device" is referred to as the "first device (or the RedCap device)" as described above. On the other hand, a normal device not being the first device is referred to as a "non-Reduced Capability device". The device is referred to as the "second device (or the non-RedCap device)" as described above.

As described above, in 3GPP Release 17, standard specifications of the first device (RedCap device) are studied focusing on three use cases, namely an industrial wireless sensor, video surveillance, and a wearable device. In NPL 1, requirements for these three use cases are described as follows.

Reference use cases and requirements related to the industrial wireless sensor are described in NPL 7 and NPL 8. The requirements for the industrial wireless sensor are as follows.
(a1) Availability of communication services is 99.99%, and end-to-end latency is less than 100 ms.
(a2) A reference bit rate is less than 2 Mbps in all of the use cases. Note that it may be asymmetric, and for example, uplink (UL) traffic may be heavy.
(a3) A device is stationary.
(a4) A battery should last at least a few years.
(a5) For safety related sensors, the latency requirement is lower, which is 5 to 10 ms (see NPL 9).

Reference use cases and requirements related to the video surveillance are as follows, as described in NPL 9.
(b 1) A reference economical video bit rate may be 2 to 4 Mbps, latency may be less than 500 ms, and reliability may be 99% to 99.9%.
(b2) In a case of a high-end video (for example, for farming), the bit rate may require 7.5 to 25 Mbps.
(b3) It should be noted that a traffic pattern is dominated by uplink (UL) transmission.

Reference use cases and requirements related to the wearable device are as follows.
(c1) A reference bit rate for a smart wearable application can be 5 to 50 Mbps in the downlink (DL), and can be 2 to 5 Mbps in the uplink.
(c2) A peak bit rate of a device is higher than the above, and can be up to 150 Mbps for the downlink, and can be up to 50 Mbps for the uplink.
(c3) A battery of a device should last multiple days (up to 1 to 2 weeks).

For example, the first UE 100A may be an industrial wireless sensor that satisfies one or two or more requirements out of (a1) to (a5) described above, a video surveillance camera that satisfies one or two or more requirements out of (b 1) to (b3) described above, or a wearable device that satisfies one or two or more requirements out of (c1) to (c3) described above.

Furthermore, the following contents are agreed in RAN2 #115e meeting held in August, 2021.
(d1) Separate indications are specified regarding barring of the first device (RedCap device) including one receiver (1 Rx chain) and the first device (RedCap device) including two receivers (2 Rx chains).
(d2) An Intra-frequency Reselection Indication (IFRI) specific to the first device (RedCap device) is specified in a System Information Block type 1 (SIB1). The IFRI is referred to as a "RedCap-specific Intra-frequency Reselection Indication". The IFRI indicates whether cell reselection within the same frequency (Intra Frequency) is permitted or not permitted. The "IFRI for the first device (RedCap device)" in the SIB 1 is common for the UE including one receive branch (1 Rx branch) or two receive branches (2 Rx branches).
(d3) When the "IFRI specific to the first device (RedCap device)" is absent from broadcast System Information (SI), the UE considers that the cell does not support the first device (RedCap device).
(d4) The first device (RedCap device) applies an existing "cellBarred" field included in a Master Information Block (MIB).

In light of the agreement, the first UE 100A may perform a cell selection or cell reselection operation specific to the first device, in addition to a cell selection or cell reselection operation (legacy cell selection or cell reselection) of the second device (non-RedCap device) in accordance with the existing "cellBarred" field. Note that the first UE 100A may be configured to operate in accordance with the contents of (d1) to (d4) described above.

Next, a capability of the first UE 100A will be more specifically described. The third UE 100C illustrated in Fig. 1 is the second device (non-RedCap device) connecting to the first base station 120. The maximum bandwidth (the so-called system bandwidth) used for communication between the third UE 100C and the first base station 120 is 100 MHz. On the other hand, the maximum bandwidth used (supported) by the first UE 100A is 20 MHz. Thus, the capability of the first UE 100A is limited compared to the capability of the third UE 100C (second device) connecting to the first base station 120.

Note that the capability limited in the first UE 100A is not limited to the bandwidth as described above. For example, the capability may include performance of the device, components of the device, a communication scheme supported by the device, and the like. For example, the number of transmit (Tx) and receive (Rx) antennas of the first UE 100A may be smaller than the number of antennas of the third UE 100C (second device). For example, the number of transmit and receive antennas of the first UE 100A is 1 to 2.

In the present example, the first UE 100A does not support a part of functions provided in the third UE 100C (second device) connecting to the first base station 120. Specifically, the first UE 100A does not support carrier aggregation (CA). On the other hand, as will be described below, the first UE 100A individually operates in the first frequency band (for example, the TDD carrier band) and the second frequency band (for example, the FDD carrier band).

### (2) Configuration of First UE

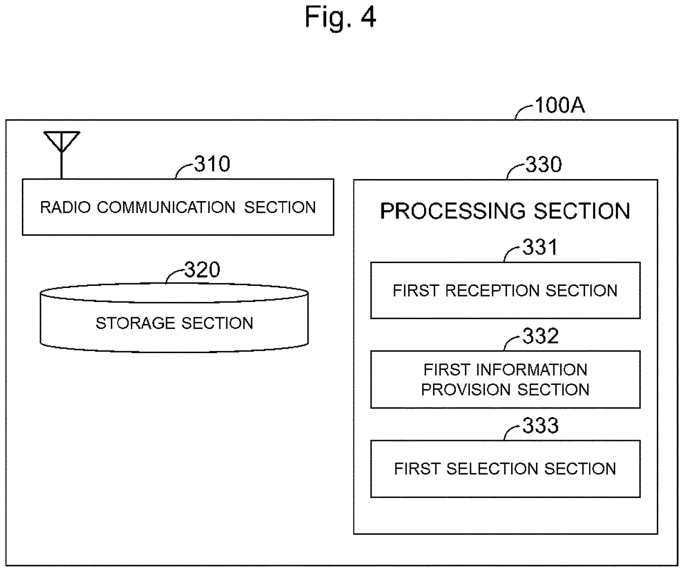

Fig. 4 is a diagram illustrating an example of a configuration of the first UE 100A according to the first example embodiment. The first UE 100A includes a radio communication section 310, a storage section 320, and a processing section 330.

The radio communication section 310 is an element that performs radio communication with the first base station 120 and the second base station 220. For example, the radio communication section 310 includes an antenna, an RF circuit, and the like.

The storage section 320 is an element that temporarily or permanently stores a program (instructions) and data used for performing various types of processing in the first UE 100A. The storage section 320 includes a volatile memory and a non-volatile memory. The volatile memory may include a RAM, for example. The non-volatile memory may include one or more of a ROM, an HDD, and an SSD, for example.

The processing section 330 is an element that provides various functions of the first UE 100A. The processing section 330 includes, as functional blocks (functional modules), a first reception section 331, a first information provision section 332, and a first selection section 333.

The processing section 330 includes one or more processors. The one or more processors may include one or more of a CPU, an MPU, and a micro controller, for example. The processing section 330 executes the program stored in the storage section 320, to thereby implement the functional blocks described above. Note that the processing section 330 may further include constituent elements other than the functional blocks described above. In other words, the processing section 330 can perform operations other than the operations performed by the operations described above.

The first UE 100A includes a plurality of protocol layers. In the present example, the first UE 100A includes a Non Access Stratum (NAS) layer and an Access Stratum (AS) layer. The NAS layer is an upper layer of the AS layer. The AS layer includes a Radio Resource Control (RRC) layer, a Packet Data Convergence Protocol (PDCP) layer, a Radio Link Control (RLC) layer, a Medium Access Control (MAC) layer, and a Physical (PHY) layer. Note that all of the layers included in the AS layer may be collectively referred to as the AS layer, or a part of the layers included in the AS layer may be referred to as the AS layer.

The functional blocks described above may be associated with the NAS layer or the AS layer. For example, the first information provision section 332 may perform processing related to the NAS layer. The first selection section 333 may perform processing related to the AS layer.

### (3) Operation Mode of First UE

The first UE 100A performs radio communication with the first base station 120 in the first frequency band (for example, the TDD carrier band). As described above, the maximum bandwidth used for communication between the first UE 100A and the first base station 120 in the first frequency band is 20 MHz. The first UE 100A operates as the first device with respect to the first base station 120.

Furthermore, the first UE 100A performs radio communication with the second base station 220 in the second frequency band (for example, the FDD carrier band). The fourth UE 100D illustrated in Fig. 1 is the second device (non-RedCap device) connecting to the second base station 220. The maximum bandwidth (the so-called system bandwidth) used for communication between the fourth UE 100D and the second base station 220 is 20 MHz. The maximum bandwidth supported by the first UE 100A is also 20 MHz. Thus, the capability of the first UE 100A is not limited compared to the capability of the fourth UE 100D (second device) connecting to the second base station 220. The first UE 100A operates as the second device (non-RedCap device) with respect to the second base station 220. The expression "the first UE 100A operates as the second device with respect to the second base station 220" herein means that the first UE 100A performs operation similar to another UE (in the present example, the fourth UE 100D) connecting to the second base station 220 from the perspective of the second base station 220. The first UE 100A is intrinsically the first device, but the first UE 100A operates as the second device in appearance in a specific frequency band (in the present example, the second frequency band).

Thus, in the present example, operation as the first device and operation as the second device are distinguished and defined for each frequency band used by the first UE 100A. In other words, the first UE 100A operates as the first device in the first frequency band at a certain time point, and operates as the second device in the second frequency band at another time point. Thus, the first UE 100A selects one of two modes as the operation mode, and operates according to the selected operation mode. The operation mode includes a first mode and a second mode.

The first mode is a mode in which the first UE 100A performs communication with the first base station 120 in the first frequency band. In other words, the first mode is a mode in which the first UE 100A operates as the first device with respect to the first base station 120.

In other words, the first mode is a mode in which the capability of the first UE 100A is limited compared to the capability of another UE (in the present example, the third UE 100C) connecting to the first base station 120. More specifically, in the present example, the first mode is a mode in which the maximum bandwidth supported by the first UE 100A is limited compared to the maximum bandwidth supported by another UE (in the present example, the third UE 100C) connecting to the first base station 120.

The second mode is a mode different from the first mode. The second mode is a mode in which the first UE 100A performs communication with the second base station 220 in the second frequency band. In other words, the second mode is a mode in which the first UE 100A operates as the second device with respect to the second base station 220.

In other words, the second mode is a mode in which the capability of the first UE 100A is not limited compared to the capability of another UE (in the present example, the fourth UE 100D) connecting to the second base station 220. More specifically, in the present example, the second mode is a mode in which the maximum bandwidth supported by the first UE 100A is not limited compared to the maximum bandwidth supported by another UE (in the present example, the fourth UE 100D) connecting to the second base station 220.

### <3-5. Operation Example of First User Equipment>

Next, an operation example of each functional block in the processing section 330 will be described.

### (1) First Reception Section

The first reception section 331 receives network slice information from the base station (the first base station 120 or the second base station 220). The network slice information is also referred to as "slice info".

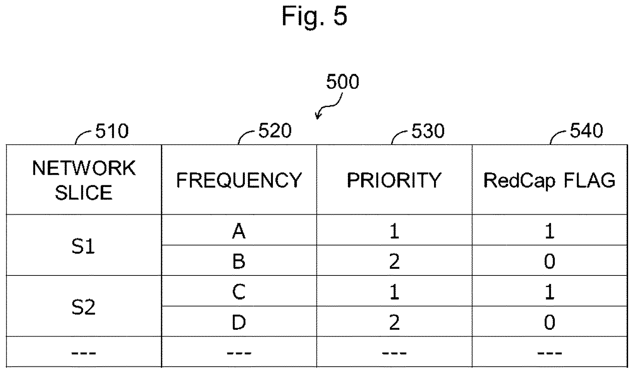

Fig. 5 is a diagram conceptually illustrating an example of a configuration of network slice information 500 according to the first example embodiment. The network slice information 500 includes information related to one or more network slices supported by a serving cell and neighboring cells of the serving cell.

The network slice information 500 includes, as constituent items, a network slice 510, a frequency 520, a priority 530, and a RedCap flag 540. These constituent items are associated with each other.

The network slice 510 is information for identifying the network slice. The network slice 510 includes information related to one or more network slices. Note that the network slice 510 may be information for identifying a group of network slices including two or more network slices. In the present example, the network slice information 500 includes information related to a network slice S1 and information related to a network slice S2.

The frequency 520 is information for identifying the frequency(ies) for using the network slice 510. Specifically, the frequency 520 indicates one or more frequencies respectively corresponding to one or more network slices identified with the network slice 510. In the present example, a frequency A and a frequency B are associated with the network slice S1.

The priority 530 is information indicating a priority of the frequency 520. In the present example, regarding the network slice S1, the priority of the frequency A is higher than that of the frequency B.

The RedCap flag 540 is information indicating whether or not the network slice 510 supports the first device (in the present example, the first UE 100A operating in the first mode). Specifically, the RedCap flag 540 indicates whether or not each of the one or more frequencies identified with the frequency 520 supports the first device. In the present example, "1" indicates that the first device is supported, and "0" indicates that the first device is not supported.

In the present example, regarding the network slice S1, the frequency A supports the first device. On the other hand, the frequency B does not support the first device.

The first reception section 331 receives the network slice information 500 via broadcast and/or Dedicated Signaling.

For example, the first reception section 331 receives the network slice information 500, according to an RRC state. The RRC state includes an RRC_CONNECTED state, an RRC_IDLE state, and an RRC_INACTIVE state. In the RRC_CONNECTED state, connection between the UE and the radio access network (base station) is established in the RRC layer. In the RRC_IDLE state, connection between the UE and the radio access network is not established in the RRC layer. In the RRC _INACTIVE state, the state of the UE is substantially the same as the RRC_IDLE state, although a UE context is stored in the radio access network (for example, the gNB).

When the RRC state is the RRC_IDLE state, the first reception section 331 receives the System Information (SI) broadcast by the base station (for example, the first base station 120). The base station transmits the system information, using a Master Information Block (MIB) and a System Information Block (SIB). The network slice information 500 is included in the system information. For example, the network slice information 500 is included in the SIB. For example, the network slice information 500 may be included in a SIB2 and/or a SIB4. For example, the network slice information 500 including information related to one or more network slices supported by the serving cell may be included in the SIB2. The network slice information 500 including information related to one or more network slices supported by a neighboring cell may be included in the SIB4. The network slice information 500 may be included in another SIB (for example, a SIB1 or a SIB3).

Note that the first reception section 331 also acquires other information via the system information. The first reception section 331 receives the bandwidth information being information related to a bandwidth. The bandwidth information is information related to an initial bandwidth part (initial BWP). The initial BWP includes at least one of an initial BWP for the downlink (initial downlink BWP) and an initial BWP for the uplink (initial uplink BWP). The initial BWP is included in the system information. The initial BWP is included in the MIB or the SIB.

Furthermore, the first reception section 331 receives an indication related to barring of the first device and the Intra-frequency Reselection Indication (IFRI) specific to the first device. The IFRI is the "RedCap-specific Intra-frequency Reselection Indication" described above. These indications may be included in the SIB1.

When the RRC state is the RRC_INACTIVE state, the first reception section 331 may receive the network slice information 500 via the system information, similarly to when the RRC state is the RRC_IDLE state.

When the RRC state is the RRC_CONNECTED state, the first reception section 331 receives the network slice information 500 via an RRC message. The first reception section 331 may receive the network slice information 500 on an RRC Connection Release message. This allows the first reception section 331 to acquire the network slice information 500 at a timing of transitioning from the RRC_CONNECTED state to the RRC_IDLE state (in other words, at a timing of the next cell selection). Note that the first reception section 331 may receive the network slice information 500 on another RRC message.

Furthermore, the first reception section 331 receives cell information from the base station (the first base station 120 or the second base station 220).

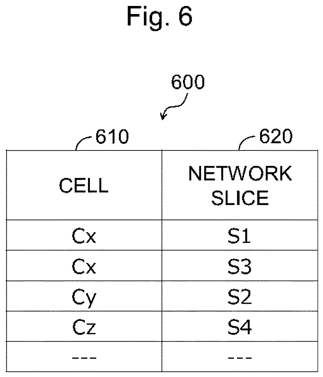

Fig. 6 is a diagram conceptually illustrating an example of a configuration of cell information 600 according to the first example embodiment. The cell information 600 is information related to a cell supporting the network slice. The cell information 600 includes information on which network slice is supported by each of the serving cell and the neighboring cells.

The cell information 600 includes, as constituent items, a cell 610 and a network slice 620. These constituent items are associated with each other.

The cell 610 is information for identifying the cell. In the present example, the cell 610 includes the cell (serving cell) on which the first UE 100A camps and the neighboring cells of the serving cell.

The network slice 620 is information for identifying the network slice. The network slice 620 may be information for identifying a group of network slices including two or more network slices. In the present example, a cell Cx supports network slices S1 and S3.

Note that the first reception section 331 may receive the cell information 600 via the system information broadcast by the base station (the first base station 120 or the second base station 220). The cell information 600 may be included in the SIB.

Furthermore, the first reception section 331 may receive the cell information 600, according to the RRC state, similarly to the above description. For example, when the RRC state is the RRC_IDLE state or the RRC _INACTIVE state, the first reception section 331 may receive the cell information 600 via the system information. When the RRC state is the RRC_CONNECTED state, the first reception section 331 may receive the cell information 600 via RRC signaling.

### (2) First Information Provision Section

The first information provision section 332 (corresponding to the NAS layer) provides network slice priority information to the first selection section 333 (corresponding to the AS layer).

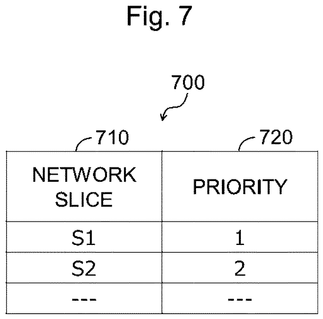

Fig. 7 is a diagram conceptually illustrating an example of a configuration of network slice priority information 700 according to the first example embodiment. The network slice priority information 700 is information related to a priority of the network slice.

The network slice priority information 700 includes, as constituent items, a network slice 710 and a priority 720. These constituent items are associated with each other.

The network slice 710 is information for identifying the network slice. The network slice 710 may be information for identifying a group of network slices including two or more network slices.

The priority 720 is information indicating a priority of the network slice 710. In the present example, the priority of the network slice S1 is higher than that of the network slice S2.

Thus, the first selection section 333 can select the network slice in order of the priority, using the network slice priority information 700.

### (3) First Selection Section

The first selection section 333 performs processing related to selection of the operation mode and processing related to cell selection (reselection). These processings will be described below.

### - Processing Related to Selection of Operation Mode

The first selection section 333 performs processing related to selection of the operation mode. Specifically, the first selection section 333 receives information related to the initial BWP from the first reception section 331. The first selection section 333 selects the operation mode, using the information related to the initial BWP.

First, selection of the first mode will be described. The first reception section 331 receives information related to the initial BWP from the first base station 120 in the first frequency band (3.7 GHz band). The information related to the initial BWP is information for the second device (for example, the third UE 100C) communicating with the first base station 120, and indicates the system bandwidth in the first base station 120.

In this case, in communication between the first UE 100A and the first base station 120, the first UE 100A should operate as the first device.

In the first frequency band, the maximum bandwidth used for communication between the first base station 120 and the second device is 100 MHz. Thus, the received information related to the initial BWP indicates 100 MHz. On the other hand, as described above, the maximum bandwidth used (supported) in communication between the first UE 100A and each of the first base station 120 and the second base station 220 is 20 MHz. In this manner, the information related to the initial BWP (100 MHz) transmitted to the second device in the first frequency band is larger than the bandwidth (20 MHz) supported by the first UE 100A. This can be used as a condition for the first selection section 333 to select the operation mode.

The first selection section 333 selects the operation mode, based on a result of comparison between the information related to the initial BWP and the maximum bandwidth supported by the first UE 100A. Note that the first selection section 333 can acquire information related to the maximum bandwidth supported by the first UE 100A from the first UE 100A itself.

Specifically, when the information related to the initial BWP received in the first frequency band is larger than the maximum bandwidth supported by the first UE 100A, the first selection section 333 selects the first mode as the operation mode. This allows the first UE 100A to operate as the first device with respect to the first base station 120.

Next, selection of the second mode will be described. At another timing, the first reception section 331 receives information related to the initial BWP from the second base station 220 in the second frequency band (700 MHz band). The information related to the initial BWP is information for the second device (for example, the fourth UE 100E) communicating with the second base station 220, and indicates the system bandwidth in the second base station 220.

In the second frequency band, the maximum bandwidth used for communication between the second base station 220 and the second device is 20 MHz. Thus, the received information related to the initial BWP indicates 20 MHz. Thus, the information related to the initial BWP (20 MHz) is not larger than the maximum bandwidth (20 MHz) supported by the first UE 100A.

Thus, when the information related to the initial BWP received in the second frequency band is not larger than the maximum bandwidth supported by the first UE 100A, the first selection section 333 selects the second mode as the operation mode. This allows the first UE 100A to operate as the second device with respect to the second base station 220.

### - Processing Related to Cell Selection (Reselection)

The first selection section 333 performs processing related to cell selection (reselection). Note that cell selection includes cell selection within the same frequency (Intra Frequency), cell selection between different frequencies (Inter Frequency), and cell selection between Radio Access Technologies (RATs).

Specifically, the first selection section 333 selects the network slice to be connected by the first UE 100A, and selects a cell supporting the selected network slice.

First, the first selection section 333 receives the network slice information 500 and the cell information 600 from the first reception section 331. Furthermore, the first selection section 333 receives the network slice priority information 700 from the first information provision section 332.

Next, the first selection section 333 selects the network slice having the highest priority, using the network slice priority information 700. The network slice selected here is hereinafter referred to as a "slice Sa". According to the network slice priority information 700, the priority of the network slice S1 is the highest. Thus, the first selection section 333 selects the network slice S1 as the slice Sa.

Next, the first selection section 333 selects the frequency having the highest priority as the slice Sa, using the network slice information 500. The frequency selected here is hereinafter referred to as a "frequency fa". According to the network slice information 500, regarding the slice Sa (in other words, the network slice S1), the priority of the frequency A is the highest. Thus, the first selection section 333 selects the frequency A as the frequency fa. In this manner, the first selection section 333 selects the frequency fa corresponding to the slice Sa, using the network slice information 500.

Next, the first selection section 333 performs measurement processing for received quality in order to perform cell selection (reselection). Then, the first selection section 333 selects the cell (highest ranked cell) having the highest received quality out of the cells detected by scanning a predetermined frequency (here, the frequency fa).

The received quality may be a Received Signal Strength Indicator (RSRQ), Reference Signal Received Power (RSRP), Reference Signal Received Quality (RSSI), or a Signal to Interference plus Noise Ratio (SINR), or may be two or more of these. Note that RSRP measurement, RSRQ measurement, and RSSI measurement are referred to as Radio Resource Management measurement (RRM measurement).

The first selection section 333 performs the measurement processing according to the operation mode. When the first selection section 333 selects the first mode as the operation mode, the first selection section 333 performs first measurement processing. When the first selection section 333 selects the second mode as the operation mode, the first selection section 333 performs second measurement processing.

The first measurement processing and the second measurement processing may be different. The first measurement processing may include processing corresponding to the first device. The second measurement processing may include processing corresponding to the second device.

The first selection section 333 may perform relaxed measurement as the measurement processing. In this case, the first selection section 333 may change a relaxed measurement criterion, according to the operation mode. In other words, the relaxed measurement criterion in the first measurement processing and the relaxed measurement criterion in the second measurement processing may be different.

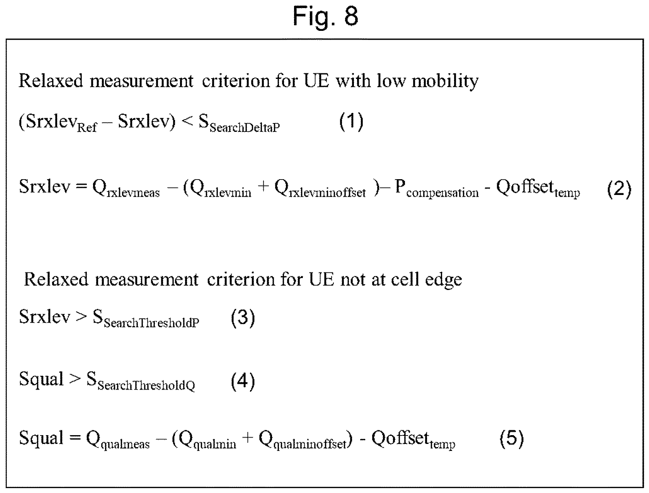

NPL 5 describes the relaxed measurement criterion. According to NPL 5, regarding the UE having low mobility, when expression (1) of Fig. 8 is satisfied, the relaxed measurement criterion is satisfied.

Srxlev is a receive level value (RX level value), and is the current receive level value in the serving cell. Srxlev is defined in expression (2) of Fig. 8. Qᵣₓₗₑᵥₘₑₐₛ is a receive level (RSRP) value of a measured cell. Qᵣₓₗₑᵥₘᵢₙ is a minimum required receive level value. Q_{rxlevminoffset} and Qoffsetₜₑₘₚ are each a predetermined offset value. P_{compensation} is a parameter related to an uplink capability of the UE.

Srxlev_{Ref} is a reference value of Srxlev in the serving cell. After a new cell is selected or reselected, when (Srxlev - Srxlev_{Rer}) > 0, or when the relaxed measurement criterion is not satisfied for a predetermined time period T_{SearchDeltaP}, the UE sets the value of Srxlev_{Ref} to the current Srxlev in the serving cell.

S_{SearchDeltaP} is a predetermined threshold.

In a first example, the threshold (S_{SearchDeltaP}) of expression 1 in the first measurement processing and the threshold (S_{SearchDeltaP}) of expression 1 in the second measurement processing may be different. For example, the threshold (S_{SearchDeltaP}) of expression 1 in the first measurement processing may be set smaller than the threshold (S_{SearchDeltaP}) of expression 1 in the second measurement processing.

In a second example, when the RRC state of the first UE 100A is the RRC_IDLE state or the RRC _INACTIVE state, as described above, the relaxed measurement criterion in the first measurement processing and the relaxed measurement criterion in the second measurement processing may be different.

Furthermore, according to NPL 5, regarding the UE not present at the edge of the cell (for example, the UE present near the center of the cell), when expression (3) of Fig. 8 is satisfied, the relaxed measurement criterion is satisfied.

S_{SearchThresholdP} is a predetermined threshold.

When expression (4) is satisfied in addition to expression (3), it may be determined that the relaxed measurement criterion is satisfied. Squal is defined in expression (5). Q_{qualmeas} is a received quality (RSRQ) value of a measured cell. Q_{qualmin} is a minimum required received quality value. Q_{qualminoffset} is a predetermined offset value. Qoffsetₜₑₘₚ is the same as the contents described above.

S_{SearchThresholdQ} is a predetermined threshold.

In a third example, the threshold (S_{SearchThresholdP}) of expression (3) in the first measurement processing and the threshold (S_{SearchThresholdP}) of expression (3) in the second measurement processing may be different. For example, the threshold (S_{SearchThresholdP}) of expression (3) in the first measurement processing may be set smaller than the threshold (S_{SearchThresholdP}) of expression (3) in the second measurement processing.

Furthermore, the threshold (S_{SearchTbresholdQ}) of expression (4) in the first measurement processing and the threshold (S_{SearchThresholdQ)} of expression (4) in the second measurement processing may be different. For example, the threshold (S_{SearchTbresholdQ}) of expression (4) in the first measurement processing may be set smaller than the threshold (S_{SearchTbresholdQ}) of expression (4) in the second measurement processing.

The third example may be used as the relaxed measurement criterion together with at least one of the first example and the second example.

In yet another example, the first selection section 333 may perform RRM measurement regarding the serving cell and its neighboring cells as follows.

The base station (the first base station 120 or the second base station 220) transmits a synchronization signal/PBCH block (SSB). The SSB is a unit block at least including a synchronization signal and/or a PBCH. The SSB is used for RRM measurement. Such measurement is also referred to as "SSB based RRM Measurement".

The SSB includes associated remaining minimum system information (RMSI), and is associated with an individual cell. Such an SSB is referred to as a cell defining SSB (CB-SSB).

On the other hand, when the SSB does not include associated RMSI, such an SSB is referred to as a non-cell defining SSB (NCD-SSB).

The first selection section 333 may perform RRM measurement based on the NCD-SSB as the first measurement processing. The first selection section 333 may perform RRM measurement based on the CD-SSB as the second measurement processing.

The first selection section 333 selects the cell having the highest received quality, using results of the measurement processing (the first measurement processing or the second measurement processing). The cell selected here is hereinafter referred to as a "cell Ca".

The first selection section 333 determines whether or not a predetermined cell selection condition is satisfied for the cell Ca. The cell selection condition is a condition for the first UE 100A to determine whether the first UE 100A can camp on the cell Ca.

In the present example, the cell selection condition when the operation mode is the first mode and the cell selection condition when the operation mode is the second mode are different from each other.

For example, the cell selection condition when the operation mode is the first mode includes the following conditions A1, A2, and A3. When all of conditions A1, A2, and A3 are satisfied, the first selection section 333 determines that the cell selection condition is satisfied. When at least one of conditions A1, A2, and A3 is not satisfied, the first selection section 333 determines that the cell selection condition is not satisfied.

(Condition A1) The cell Ca is a suitable cell.

(Condition A2) The cell Ca supports the slice Sa.

(Condition A3) The RedCap flag 540 corresponding to the frequency fa is "1" (in other words, the frequency fa supports the first device).

The cell selection condition when the operation mode is the second mode includes conditions A1 and A2 above, and does not include condition A3 above. When both of conditions A1 and A2 are satisfied, the first selection section 333 determines that the cell selection condition is satisfied. When at least one of conditions A1 and A2 is not satisfied, the first selection section 333 determines that the cell selection condition is not satisfied.

A determination method regarding each of conditions A1, A2, and A3 will be described below.

### - Condition A1

The first selection section 333 may determine whether condition A1 is satisfied in accordance with contents of NPL 5. An overview of conditions of a suitable cell described in NPL 5 will be described below. When the following (B1) and (B2) are satisfied, condition A1 is satisfied.

### Condition (B1)

- The cell is a "selected PLMN" or a "registered PLMN", or a "PLMN in an Equivalent PLMN list".
- Cell selection criteria are satisfied.

### Condition (B2)

The following is satisfied in the latest information provided by the Non-Access Stratum (NAS).
- The cell is not a barred cell.
- The cell is a part of a Tracking Area (TA) not being a part of a list of "Forbidden Tracking Areas for Roaming". In this case, the cell belongs to the PLMN satisfying (B1).

Note that, when the operation mode is the first mode, the first selection section 333 may determine whether or not the cell Ca is a suitable cell in accordance with contents of NPL 4, instead of or in addition to conditions B 1 and B2 above.

The first selection section 333 refers to "cellBarred" included in the MIB. "cellBarred" indicates whether or not access to the cell is barred. When "cellBarred" indicates "not barred", the first selection section 333 may refer to "the indication related to barring of the first device and the IFRI specific to the first device" included in the SIB 1, and determine whether or not the cell Ca can be accessed (in other words, the cell Ca is a suitable cell).

### - Condition A2

The first selection section 333 determines whether condition A2 is satisfied, based on the cell information 600. For example, in the cell information 600, when the cell Ca is associated with the slice Sa (in other words, when the cell Ca supports the slice Sa), the first selection section 333 determines that condition A2 is satisfied. In the cell information 600, when the cell Ca is not associated with the slice Sa (in other words, when the cell Ca does not support the slice Sa), the first selection section 333 determines that condition A2 is not satisfied. In this manner, the first selection section 333 can select the cell supporting the selected slice Sa, using the cell information 600.

### - Condition A3

The first selection section 333 determines whether condition A3 is satisfied, based on the network slice information 500.

When the cell selection condition is satisfied, the first selection section 333 selects the cell Ca as the cell on which the first UE 100A camps. Then, the first UE 100A camps on the cell Ca.

Note that, when the cell selection condition is not satisfied, the first selection section 333 selects the frequency having the next highest priority as the frequency fa. According to the network slice information 500, regarding the slice Sa (network slice S1), the frequency having the next highest priority, followed by the frequency A, is the frequency B. Thus, the first selection section 333 selects the frequency B as the frequency fa. Then, the first selection section 333 performs the measurement processing according to the operation mode, and determines whether the cell selection condition is satisfied.

Note that, regarding the slice Sa (network slice S1), when there is no selectable frequency, the first selection section 333 selects the network slice having the next highest priority as the slice Sa. According to the network slice priority information 700, the network slice having the next highest priority, followed by the network slice S1, is the network slice S2. The first selection section 333 selects the network slice S2 as the slice Sa. Then, regarding the slice Sa (network slice S2), the first selection section 333 selects the frequency (frequency C) having the highest priority as the frequency fa according to the network slice information 500. The first selection section 333 performs the measurement processing according to the operation mode, and determines whether the cell selection condition is satisfied.

Note that, when neither a selectable network slice nor a selectable frequency remains, the first selection section 333 may perform predetermined fallback processing.

### <3-6. Flow of Processing of First User Equipment>

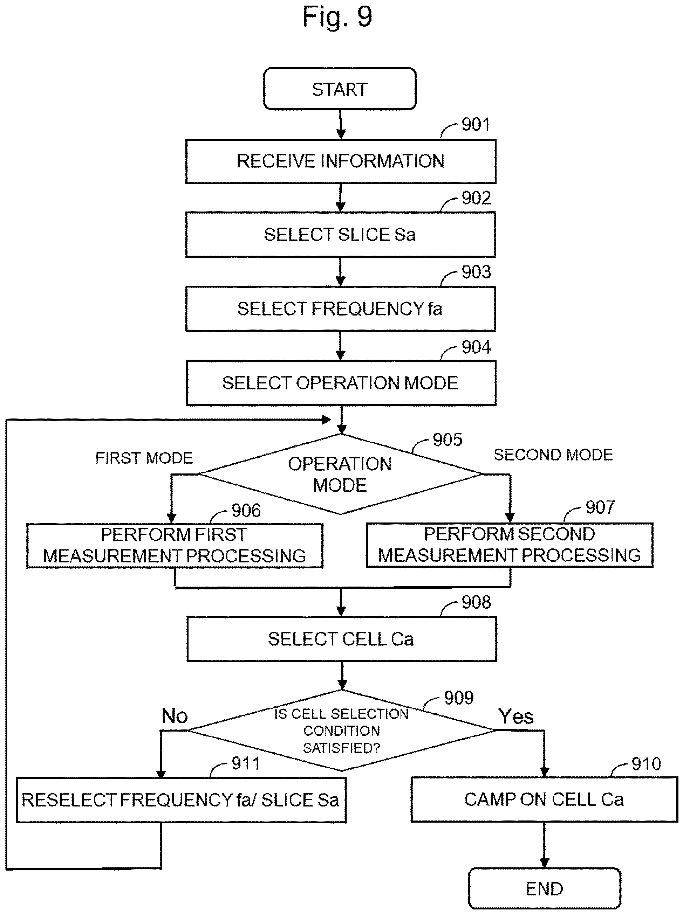

Next, with reference to Fig. 9, a flow of processing in which the first UE 100A selects (reselects) a cell will be described. Fig. 9 is a flowchart illustrating a flow of processing of the first UE 100A according to the first example embodiment.

The first reception section 331 receives various pieces of information (901). Specifically, as described above, the first reception section 331 receives the network slice information 500 and the cell information 600. Furthermore, as described above, the first reception section 331 receives the bandwidth information (information related to the initial BWP).

Next, the first information provision section 332 provides the network slice priority information 700 to the first selection section 333. Then, the first selection section 333 selects the slice Sa, using the network slice priority information 700 (902).

Next, the first selection section 333 selects the frequency fa regarding the slice Sa, using the network slice information 500 (903).

Next, as described above, the first selection section 333 selects the operation mode by using the bandwidth information (904). Specifically, the first selection section 333 selects the operation mode, based on a result of comparison between the information related to the initial BWP and the maximum bandwidth supported by the first UE 100A. When the information related to the initial BWP is larger than the maximum bandwidth supported by the first UE 100A, the first selection section 333 selects the first mode as the operation mode. On the other hand, when the information related to the initial BWP is not larger than the maximum bandwidth supported by the first UE 100A, the first selection section 333 selects the second mode as the operation mode.

Next, the first selection section 333 determines the selected operation mode (905). When the operation mode is the first mode, the first selection section 333 performs the first measurement processing (906). On the other hand, when the operation mode is the second mode, the first selection section 333 performs the second measurement processing (907).

Next, the first selection section 333 selects the cell Ca, based on results of the measurement processing (the first measurement processing or the second measurement processing) (908).

Next, the first selection section 333 determines whether or not the cell selection condition described above is satisfied regarding the cell Ca (909).

When the cell selection condition is satisfied regarding the cell Ca (909: Yes), the first UE 100A camps on the cell Ca (910).

When the cell selection condition is not satisfied regarding the cell Ca (909: No), the first selection section 333 reselects the frequency fa and/or the slice Sa (911).

It is assumed that a selectable frequency remains regarding the slice Sa. In this case, the first selection section 333 reselects only the frequency fa. The first selection section 333 selects the frequency having the next highest priority as the frequency fa, using the network slice information 500. Then, the first selection section 333 returns to Step 905.

On the other hand, it is assumed that no selectable frequency remains regarding the slice Sa. In this case, first, the first selection section 333 reselects the slice Sa. The first selection section 333 selects the network slice having the next highest priority as the slice Sa, using the network slice priority information 700. Then, the first selection section 333 selects the frequency having the highest priority regarding the reselected slice Sa as the frequency fa, using the network slice information 500. Then, the first selection section 333 returns to Step 905.

### <3-7. Effects>

The above configuration produces the following effects. The first UE 100A can appropriately select the operation mode by using the bandwidth information.

Furthermore, the first UE 100A can perform the processing related to cell selection (reselection) according to the operation mode. Specifically, when the first UE 100A selects the first mode as the operation mode, the first UE 100A performs the first measurement processing. When the first UE 100A selects the second mode as the operation mode, the first UE 100A performs the second measurement processing. Thus, the first measurement processing or the second measurement processing is appropriately performed according to the operation mode. Furthermore, the cell selection condition when the operation mode is the first mode and the cell selection condition when the operation mode is the second mode are appropriately set according to the operation mode. Then, the first UE 100A can appropriately select the cell on which the first UE 100A camps, using results of the measurement processing (the first measurement processing or the second measurement processing).

### <3-8. Example Alterations>

The technique related to the present disclosure is not limited to the example embodiment described above. Two or more example aspects freely selected out of the example embodiment described above and the example alterations to be described below may be combined as appropriate on the condition that there is no inconsistency.

### (1) First Example Alteration

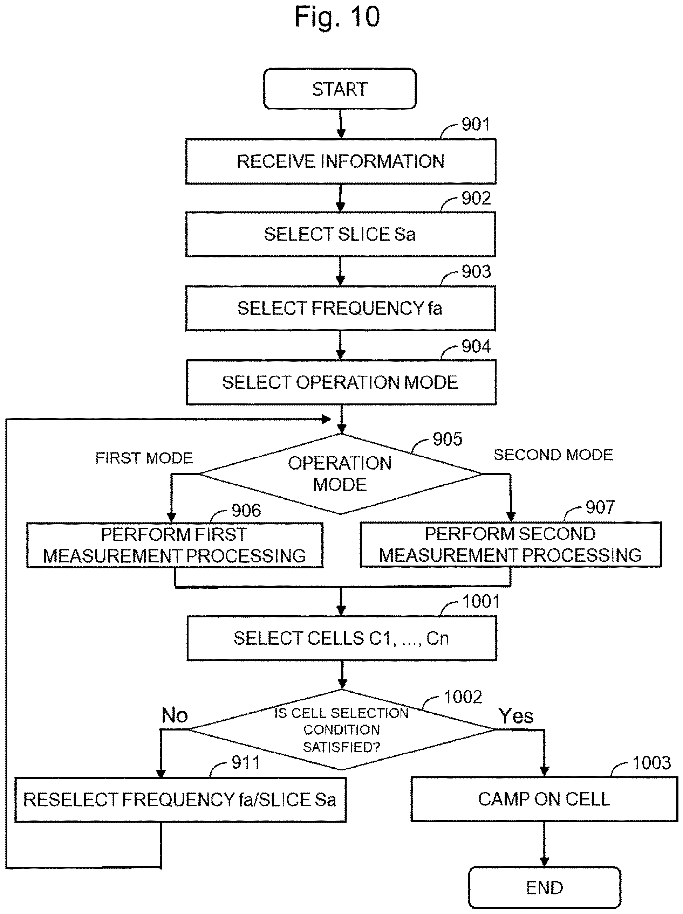

Fig. 10 is a flowchart illustrating an example alteration of the flow of processing of the first UE 100A according to the first example embodiment. In Fig. 10, steps in which the same processing as Fig. 9 are performed are denoted by the same reference signs as Fig. 9, and overlapping descriptions are hence omitted.

The first selection section 333 selects a plurality of cells C1, ..., Cn, based on results of the measurement processing (the first measurement processing or the second measurement processing) (1001). Here, n is an integer of 2 or greater. The plurality of cells C1, ..., Cn are n cells selected in descending order of the received quality. The received quality of the cell C1 is the highest, and the received quality of the Cn is the lowest. Here, an example of n = 2 is described.

The first selection section 333 determines whether or not the cell selection condition is satisfied regarding the cells C1 and C2 selected in Step 1001 (1002). First, the first selection section 333 determines whether or not the cell selection condition is satisfied regarding the cell C1 having the highest received quality. When the cell selection condition is satisfied regarding the cell C1, the first UE 100A camps on the cell C1 (1003).

When the cell selection condition is not satisfied regarding the cell C1, the first selection section 333 determines whether or not the cell selection condition is satisfied regarding the cell C2 having the next highest received quality. When the cell selection condition is satisfied regarding the cell C2, the first UE 100A camps on the cell C2 (1003). When the cell selection condition is not satisfied regarding the cell C2, the first selection section 333 proceeds to Step 911.

According to the configuration described above, the first UE 100A can select the cell on which the first UE 100A camps out of the n cells selected in descending order of the received quality. This allows the first UE 100A to be more likely to camp on the cell without reselecting the frequency fa. In other words, the first UE 100A can be more likely to camp on the cell in a frequency having a high priority. Furthermore, the measurement processing (the first measurement processing or the second measurement processing) after reselection of the frequency fa and/or the slice Sa can be avoided. In other words, the time and the amount of processing before the first UE 100A selects a cell can be reduced.

### (2) Second Example Alteration

The base station (the first base station 120 or the second base station 220) may broadcast (or transmit) the network slice information for the first device and the network slice information for the second device. The network slice information for the first device is hereinafter referred to as "first network slice information". The network slice information for the second device is referred to as "second network slice information". The first UE 100A receives the first network slice information and the second network slice information.

The first network slice information includes information related to one or more network slices supporting the first device, and information related to one or more frequencies respectively corresponding to the one or more network slices and supporting the first device. Thus, the first network slice information does not include information related to the network slice not supporting the first device or information related to the frequency not supporting the first device. By using the first network slice information, the item of the RedCap flag 540 of the network slice information 500 described above can be omitted. The first UE 100A may select the frequency fa, using the first network slice information.

Similarly, the second network slice information includes information related to one or more network slices supporting the second device, and information related to one or more frequencies respectively corresponding to the one or more network slices and supporting the second device. The first UE 100A may select the frequency fa, using the second network slice information.

Note that the priority of the frequency for the first device and the priority of the frequency for the second device may be different. According to the configuration described above, the priority of the frequency can be set to be different between the first device and the second device.

### (3) Third Example Alteration

The processing steps illustrated in the flowchart of Fig. 9 need not necessarily be performed in the illustrated order. The first selection section 333 may select the operation mode, and subsequently select the slice Sa and the frequency fa. In the configuration, when the first selection section 333 selects the first mode as the operation mode, the first selection section 333 selects only the frequency in which the RedCap flag 540 is "1" as the frequency fa. In the configuration, condition A3 may be removed from the cell selection condition when the operation mode is the first mode. According to the configuration, the first selection section 333 can perform the first measurement processing only regarding the frequency corresponding to the first device. Note that the first selection section 333 may select the operation mode, and subsequently select the frequency fa, using the first network slice information in the second example alteration described above.

### <<4. Second Example Embodiment>>

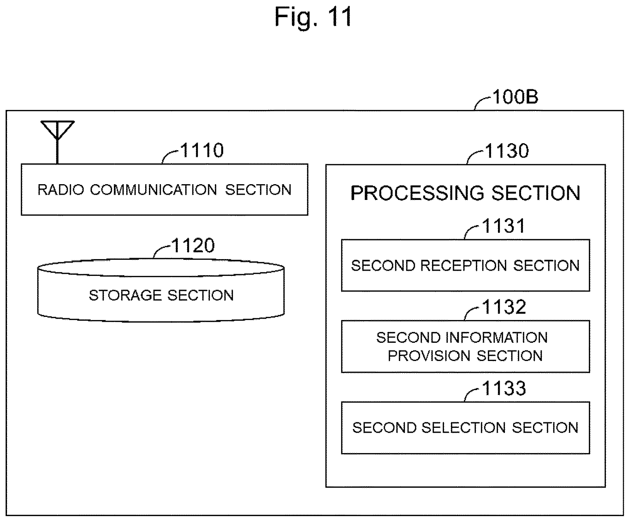

Next, with reference to Fig. 11 to Fig. 13, a second example embodiment and example alterations thereof will be described. Although the first example embodiment has described the processing of the first UE 100A having two operation modes, a part of the first example embodiment can also be applied to the UE operating only as the first device (RedCap device).

NPL 6 describes a flow of processing in which the UE selects a cell in a communication system configuring one or more network slices. However, NPL 6 describes only operation of the second device (non-RedCap device). Thus, an issue is how the UE operating only as the first device selects a cell.

The second UE 100B illustrated in Fig. 1 is the first device (RedCap device). The second UE 100B is an industrial wireless sensor, a video surveillance camera, a wearable device, or the like. The second UE 100B has only one operation mode, in other words, operates as the first device with respect to the first base station 120.

For example, the second UE 100B may be an industrial wireless sensor that satisfies one or two or more requirements out of (a1) to (a5) described above, a video surveillance camera that satisfies one or two or more requirements out of (b 1) to (b3) described above, or a wearable device that satisfies one or two or more requirements out of (c1) to (c3) described above.

In the present example as well, the maximum bandwidth (the so-called system bandwidth) used for communication between the second device (non-RedCap device) and the first base station 120 is 100 MHz. On the other hand, the maximum bandwidth supported by the second UE 100B is 20 MHz. Thus, the capability of the second UE 100B is limited compared to the capability of the second device (for example, the third UE 100C) connecting to the first base station 120.

Note that the capability limited in the second UE 100B is not limited to the bandwidth as described above. For example, the capability may include performance of the device, components of the device, a communication scheme supported by the device, and the like. For example, the number of transmit (Tx) and receive (Rx) antennas of the second UE 100B may be smaller than the number of antennas of the second device. For example, the number of transmit and receive antennas of the second UE 100B is 1 to 2.

Furthermore, the second UE 100B does not support a part of functions provided in the second device (for example, the third UE 100C) connecting to the first base station 120. Specifically, the second UE 100B does not support carrier aggregation (CA). Processing in which the second UE 100B selects a cell will be described below.

### <4-1. Configuration of Second User Equipment>

Fig. 11 is a diagram illustrating an example of a configuration of the second UE 100B according to the second example embodiment. The second UE 100B includes a radio communication section 1110, a storage section 1120, and a processing section 1130.

The radio communication section 1110 is an element that performs radio communication with the first base station 120 in the first frequency band (for example, the TDD carrier band). For example, the radio communication section 1110 includes an antenna, an RF circuit, and the like.

The storage section 1120 is an element that temporarily or permanently stores a program (instructions) and data used for performing various types of processing in the second UE 100B. The storage section 1120 includes a volatile memory and a non-volatile memory. The volatile memory may include a RAM, for example. The non-volatile memory may include one or more of a ROM, an HDD, and an SSD, for example.

The processing section 1130 is an element that provides various functions of the second UE 100B. The processing section 1130 includes, as functional blocks (functional modules), a second reception section 1131, a second information provision section 1132, and a second selection section 1133.

The processing section 1130 includes one or more processors. The one or more processors may include one or more of a CPU, an MPU, and a micro controller, for example. The processing section 1130 executes the program stored in the storage section 1120, to thereby implement the functional blocks described above. Note that the processing section 1130 may further include constituent elements other than the functional blocks described above. In other words, the processing section 1130 can perform operations other than the operations performed by the operations described above.

The functional blocks described above may be associated with the NAS layer or the AS layer. For example, the second information provision section 1132 may perform processing related to the NAS layer. The second selection section 1133 may perform processing related to the AS layer.

### <4-2. Flow of Processing of Second User Equipment>

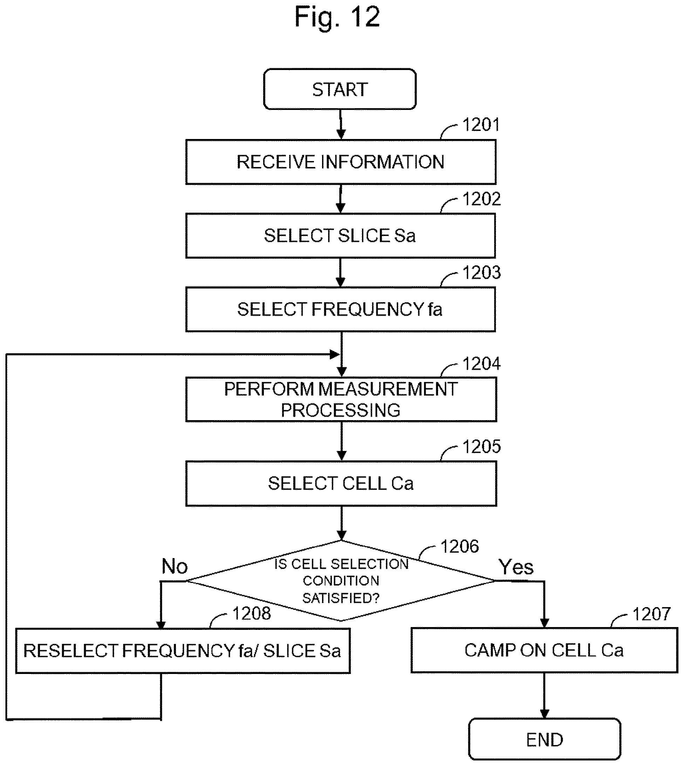

Next, with reference to Fig. 12, a flow of processing in which the second UE 100B selects (reselects) a cell will be described. Fig. 12 is a flowchart illustrating a flow of processing of the second UE 100B according to the second example embodiment.

The second reception section 1131 receives various pieces of information (1201). Specifically, the second reception section 1131 receives the network slice information 500 and the cell information 600 from the first base station 120 in the first frequency band.

Next, the second information provision section 1132 provides the network slice priority information 700 to the second selection section 1133. Then, the second selection section 1133 selects the slice Sa (the network slice having the highest priority), using the network slice priority information 700 (1202).

Next, the second selection section 1133 selects the frequency fa regarding the slice Sa, using network slice information 500 (1203). Specifically, regarding the slice Sa, the second selection section 1133 selects the frequency having the highest priority as the frequency fa out of the frequencies in which the RedCap flag 540 is "1".

Next, the second selection section 1133 performs the measurement processing (1204). The measurement processing performed here may be the same as the first measurement processing in the first example embodiment.

Next, the second selection section 1133 selects the cell Ca (the cell having the highest received quality), based on results of the measurement processing (1205).

Next, the second selection section 1133 determines whether or not the cell selection condition is satisfied regarding the cell Ca (1206). The cell selection condition here may include conditions A1 and A2 in the first example embodiment. Because the second selection section 1133 selects the frequency in which the RedCap flag 540 is "1" in Step 1203 as the frequency fa, the cell selection condition need not include condition A3 in the first example embodiment.

When the cell selection condition is satisfied regarding the cell Ca (1206: Yes), the second selection section 1133 camps on the cell Ca (1207).

When the cell selection condition is not satisfied regarding the cell Ca (1206: No), the second selection section 1133 reselects the frequency fa and/or the slice Sa (1208).

It is assumed that a selectable frequency remains regarding the slice Sa. In this case, the second selection section 1133 reselects only the frequency fa. The second selection section 1133 selects the frequency having the next highest priority as the frequency fa, using the network slice information 500. Then, the second selection section 1133 returns to Step 1204.

On the other hand, it is assumed that no selectable frequency remains regarding the slice Sa. In this case, first, the second selection section 1133 reselects the slice Sa. The second selection section 1133 selects the network slice having the next highest priority as the slice Sa, using the network slice priority information 700. Then, the second selection section 1133 selects the frequency having the highest priority regarding the reselected slice Sa and in which the RedCap flag 540 is "1" as the frequency fa, using the network slice information 500. Then, the second selection section 1133 returns to Step 1204.

Note that, when neither a selectable network slice nor a selectable frequency remains, the second selection section 1133 may perform predetermined fallback processing.

### <4-3. Effects>

The above configuration produces the following effects. When connecting to a communication system (in the present example, the first radio communication system 10) configuring one or more network slices, the second UE 100B can appropriately select a cell on which the second UE 100B camps.

### <4-4. Example Alterations>

The technique related to the present disclosure is not limited to the example embodiment described above. Two or more example aspects freely selected out of the example embodiment described above and the example alterations to be described below may be combined as appropriate on the condition that there is no inconsistency.

### (1) First Example Alteration

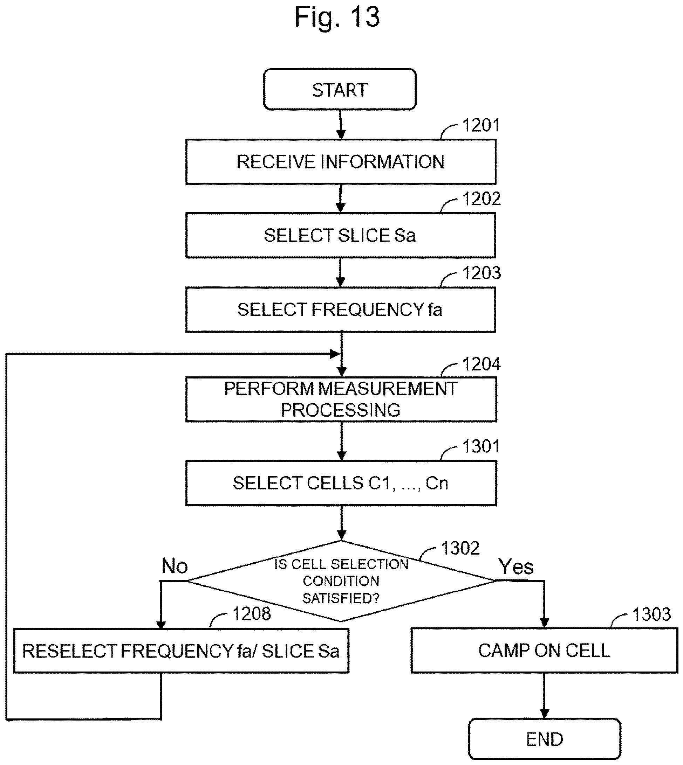

Fig. 13 is a flowchart illustrating an example alteration of the flow of processing of the second UE 100B according to the second example embodiment. In Fig. 13, steps in which the same processing as Fig. 12 are performed are denoted by the same reference signs as Fig. 12, and overlapping descriptions are hence omitted.

The second selection section 1133 selects a plurality of cells C1, ..., Cn, based on results of the measurement processing (1301). Here, n is an integer of 2 or greater. The plurality of cells C1, ..., Cn are n cells selected in descending order of the received quality. The received quality of the cell C1 is the highest, and the received quality of the Cn is the lowest. Here, an example of n = 2 is described.

The second selection section 1133 determines whether or not the cell selection condition is satisfied regarding the cells C1 and C2 selected in Step 1301 (1302). First, the second selection section 1133 determines whether or not the cell selection condition is satisfied regarding the cell C1 having the highest received quality. When the cell selection condition is satisfied regarding the cell C1, the second UE 100B camps on the cell C1 (1303).

When the cell selection condition is not satisfied regarding the cell C1, the second selection section 1133 determines whether or not the cell selection condition is satisfied regarding the cell C2 having the next highest received quality. When the cell selection condition is satisfied regarding the cell C2, the second UE 100B camps on the cell C2 (1303). When the cell selection condition is not satisfied regarding the cell C2, the second selection section 1133 proceeds to Step 1208.

According to the configuration described above, the second UE 100B can select a cell on which the second UE 100B camps out of the n cells selected in descending order of the received quality. This allows the second UE 100B to be more likely to camp on the cell without reselecting the frequency fa. In other words, the second UE 100B can be more likely to camp on the cell in a frequency having a high priority. Furthermore, the measurement processing after reselection of the frequency fa and/or the slice Sa can be avoided. In other words, the time and the amount of processing before the second UE 100B selects a cell can be reduced.

### (2) Second Example Alteration

The first network slice information of the second example alteration of the first example embodiment may be applied to the present example embodiment.

### (3) Third Example Alteration

Note that the second UE 100B may perform the cell selection or cell reselection operation specific to the first device as described above, in addition to the cell selection or cell reselection operation of the second device (non-RedCap device) in accordance with the existing "cellBarred" field. Furthermore, the second UE 100B may be configured to operate in accordance with the contents of (d1) to (d4) described above.

### <<5. Third Example Embodiment>>

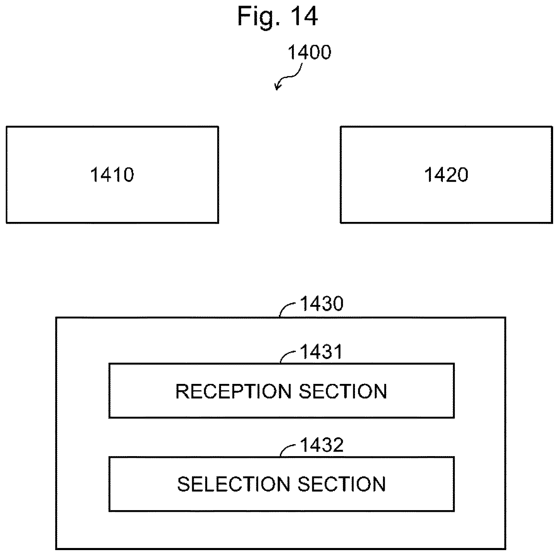

Next, with reference to Fig. 14 to Fig. 15, a third example embodiment will be described. The third example embodiment is an example embodiment in which the configuration of the first example embodiment is more generalized.

### <5-1. Configuration of System>

Fig. 14 is a diagram illustrating an example of a configuration of a system 1400 according to the third example embodiment. The system 1400 includes a first base station 1410, a second base station 1420, and a user equipment (UE) 1430. The first base station 1410 may have the same configuration as the first base station 120. The second base station 1420 may have the same configuration as the second base station 220. The UE 1430 performs communication with the first base station 1410 and the second base station 1420.

### <5-2. Configuration of User Equipment>

The UE 1430 is the first device (RedCap device). The UE 1430 selects one of a plurality of modes as the operation mode, and operates according to the selected operation mode. The operation mode includes a first mode and a second mode.

The first mode is a mode in which a capability of the UE 1430 is limited compared to a capability of a first other user equipment connecting to the first base station 1410. The second mode is a mode in which the capability of the UE 1430 is not limited compared to a capability of a second other user equipment connecting to the second base station 1420.

The first mode may be a mode in which the maximum bandwidth supported by the UE 1430 is limited compared to the maximum bandwidth supported by the first other user equipment. The second mode may be a mode in which the maximum bandwidth supported by the UE 1430 is not limited compared to the maximum bandwidth supported by the second other user equipment.

The first other user equipment may be the second device (non-RedCap device). The second other user equipment may be the second device (non-RedCap device).

The UE 1430 includes a reception section 1431 and a selection section 1432. The reception section 1431 receives bandwidth information being information related to a bandwidth from the first base station 1410 and the second base station 1420. The selection section 1432 selects one of the first mode and the second mode as the operation mode by using the bandwidth information.

Note that the reception section 1431 may operate in the same manner as the first reception section 331. The selection section 1432 may operate in the same manner as the first selection section 333.

### <5-3. Flow of Processing of User Equipment>

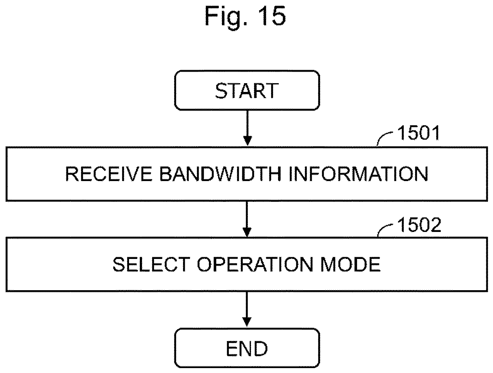

Fig. 15 is a flowchart illustrating a flow of processing of the UE 1400 according to the third example embodiment. The reception section 1431 receives the bandwidth information being information related to a bandwidth from the first base station 1410 or the second base station 1420 (1501). The selection section 1432 selects one of the first mode and the second mode as the operation mode by using the bandwidth information (1502).

According to the configuration described above, the UE 1430 can appropriately select the operation mode by using the bandwidth information.

### «6. Other Example Embodiments»

While a plurality of example embodiments have been described in the above, these example embodiments are merely examples, and various alterations can be made without departing from the scope and the spirit of the present disclosure.

The processing steps illustrated in the flowcharts need not necessarily be performed in the illustrated order. The processing steps may be performed in order different from the illustrated order, and two or more processing steps may be performed in parallel. A part of the processing steps may be removed, and further processing step(s) may be added.

In the Specification, "to transmit X to Y" is not limited to "to directly transmit X to Y", and includes "to indirectly transmit X to Y (in other words, X is transmitted to another node, and X is transmitted from such another node to Y)". Similarly, "to receive X from Y" is not limited to "to directly receive X from Y", and includes "to indirectly receive X from Y (in other words, X is transmitted from Y to another node, and X is received from such another node)".

The functions of the apparatuses described in the Specification may be implemented by one of software, hardware, and a combination of software and hardware. For example, program code (instructions) configuring software may be stored in a computer-readable recording medium inside or outside of each apparatus, and when being executed, read in a memory to be executed by a processor. A non-transitory computer-readable recording medium recording the program code may be provided.

The whole or part of the example embodiments disclosed above can be described as in the following supplementary notes, but are not limited to the following.

### (Supplementary Note 1)

A user apparatus comprising:
a reception section configured to receive bandwidth information being information related to a bandwidth, from a first base station and a second base station; and
a selection section configured to select one of a first mode and a second mode as an operation mode by using the bandwidth information, wherein
the first mode is a mode in which a capability of the user apparatus is limited compared to a capability of a first other user apparatus connecting to the first base station, and
the second mode is a mode in which the capability of the user apparatus is not limited compared to a capability of a second other user apparatus connecting to the second base station.

### (Supplementary Note 2)

The user apparatus according to Supplementary Note 1, wherein
the selection section is configured to select the operation mode, based on a result of comparison between the bandwidth indicated by the bandwidth information and a maximum bandwidth supported by the user apparatus.

### (Supplementary Note 3)

The user apparatus according to Supplementary Note 2, wherein
the bandwidth information indicates a system bandwidth of the first base station or the second base station.

### (Supplementary Note 4)

The user apparatus according to Supplementary Note 3, wherein
the bandwidth information is information related to an initial bandwidth part (initial BWP) included in system information.

### (Supplementary Note 5)

The user apparatus according to any one of Supplementary Notes 2 to 4, wherein
the reception section is configured to
receive the bandwidth information from the first base station in a first frequency band, and
receive the bandwidth information from the second base station in a second frequency band, and
the second frequency band is a frequency band lower than the first frequency band.

### (Supplementary Note 6)

The user apparatus according to Supplementary Note 5, wherein
when the bandwidth indicated by the bandwidth information received in the first frequency band is larger than the maximum bandwidth supported by the user apparatus, the selection section is configured to select the first mode as the operation mode.

### (Supplementary Note 7)

The user apparatus according to Supplementary Note 5, wherein
when the bandwidth indicated by the bandwidth information received in the second frequency band is not larger than the maximum bandwidth supported by the user apparatus, the selection section is configured to select the second mode as the operation mode.

### (Supplementary Note 8)

The user apparatus according to any one of Supplementary Notes 5 to 7, wherein
the first frequency band is a Time Division Duplex (TDD) carrier band, and
the second frequency band is a Frequency Division Duplex (FDD) carrier band.

### (Supplementary Note 9)

The user apparatus according to any one of Supplementary Notes 1 to 8, wherein
the selection section is configured to
perform first measurement processing when the selection section selects the first mode as the operation mode, and
perform second measurement processing when the selection section selects the second mode as the operation mode.

### (Supplementary Note 10)

The user apparatus according to Supplementary Note 9, wherein
a relaxed measurement criterion in the first measurement processing and a relaxed measurement criterion in the second measurement processing are different from each other.

### (Supplementary Note 11)

The user apparatus according to Supplementary Note 9 or 10, wherein
the selection section is configured to select a cell, using a result of the first measurement processing or the second measurement processing.

### (Supplementary Note 12)

The user apparatus according to Supplementary Note 11, wherein
a condition for selecting the cell when the operation mode is the first mode and a condition for selecting the cell when the operation mode is the second mode are different from each other.

### (Supplementary Note 13)

The user apparatus according to Supplementary Note 11, wherein
the selection section is configured to
select a network slice to be connected by the user apparatus, and
select the cell supporting the selected network slice.

### (Supplementary Note 14)

The user apparatus according to Supplementary Note 13, wherein
the selection section is configured to select a frequency corresponding to the selected network slice, using network slice information, and
the network slice information includes information related to one or more network slices, information related to one or more frequencies respectively corresponding to the one or more network slices, and information indicating whether or not each of the one or more frequencies supports the user apparatus operating in the first mode.

### (Supplementary Note 15)

The user apparatus according to Supplementary Note 13 or 14, wherein
the selection section is configured to select the cell supporting the selected network slice, using cell information being information related to a cell supporting a network slice.

### (Supplementary Note 16)

The user apparatus according to any one of Supplementary Notes 1 to 15, wherein
the first mode is a mode in which a maximum bandwidth supported by the user apparatus is limited compared to a maximum bandwidth supported by the first other user apparatus, and
the second mode is a mode in which the maximum bandwidth supported by the user apparatus is not limited compared to a maximum bandwidth supported by the second other user apparatus.

### (Supplementary Note 17)

The user apparatus according to any one of Supplementary Notes 1 to 16, wherein
the first mode is a mode in which the user apparatus operates as a Reduced Capability device for the first base station, and
the second mode is a mode in which the user apparatus operates as a non-Reduced Capability device for the second base station.

### (Supplementary Note 18)

The user apparatus according to any one of Supplementary Notes 1 to 17, wherein
the user apparatus is a Reduced Capability device,
the first other user apparatus is a non-Reduced Capability device connecting to the first base station, and
the second other user apparatus is a non-Reduced Capability device connecting to the second base station.

### (Supplementary Note 19)

A control method in a user apparatus, the control method comprising:
receiving bandwidth information being information related to a bandwidth, from a first base station and a second base station; and
selecting one of a first mode and a second mode as an operation mode by using the bandwidth information, wherein
the first mode is a mode in which a capability of the user apparatus is limited compared to a capability of a first other user apparatus connecting to the first base station, and
the second mode is a mode in which the capability of the user apparatus is not limited compared to a capability of a second other user apparatus connecting to the second base station.

### (Supplementary Note 20)

A program causing at least one processor equipped in a user apparatus to execute:
receiving bandwidth information being information related to a bandwidth, from a first base station and a second base station; and
selecting one of a first mode and a second mode as an operation mode by using the bandwidth information, wherein
the first mode is a mode in which a capability of the user apparatus is limited compared to a capability of a first other user apparatus connecting to the first base station, and
the second mode is a mode in which the capability of the user apparatus is not limited compared to a capability of a second other user apparatus connecting to the second base station.

### (Supplementary Note 21)

A communication system comprising:
a first base station and a second base station each configured to transmit bandwidth information being information related to a bandwidth; and
a user apparatus configured to receive the bandwidth information from the first base station and the second base station, and select one of a first mode and a second mode as an operation mode by using the bandwidth information, wherein
the first mode is a mode in which a capability of the user apparatus is limited compared to a capability of a first other user apparatus connecting to the first base station, and
the second mode is a mode in which the capability of the user apparatus is not limited compared to a capability of a second other user apparatus connecting to the second base station.

### (Supplementary Note 22)

A user apparatus having a limited capability, comprising:
a reception section configured to receive, from a base station, network slice information including information indicating whether each of one or more network slices supports the user apparatus; and
a selection section configured to select a network slice to be connected by the user apparatus, using the network slice information, and select a cell supporting the selected network slice.

### (Supplementary Note 23)

The user apparatus according to Supplementary Note 22, wherein the network slice information includes information related to the one or more network slices, information related to one or more frequencies respectively corresponding to the one or more network slices, and information indicating whether or not each of the one or more frequencies supports the user apparatus.

### (Supplementary Note 24)

The user apparatus according to Supplementary Note 23, wherein the selection section is configured to
select a frequency supporting the user apparatus out of the one or more frequencies,
perform measurement processing for the selected frequency, and
select the cell using a result of the measurement processing.

### (Supplementary Note 25)

The user apparatus according to any one of Supplementary Notes 22 to 24, wherein the network slice information is included in system information or a Radio Resource Control (RRC) message.

### (Supplementary Note 26)

The user apparatus according to any one of Supplementary Notes 22 to 25, wherein the user apparatus is an apparatus in which a maximum bandwidth supported by the user apparatus is limited compared to a maximum bandwidth supported by an other user apparatus connecting to the base station.

### (Supplementary Note 27)

The user apparatus according to any one of Supplementary Notes 22 to 26, wherein the user apparatus is a Reduced Capability device.

This application claims priority based on JP 2021-184318 filed on November 11, 2021, the entire disclosure of which is incorporated herein.

Note that the disclosure of Citation List (Non Patent Literature) is incorporated in the Specification by reference.

### Industrial Applicability

A user equipment can appropriately operate.

### Reference Signs List

- 1: System
- 10: First radio communication system
- 20: Second radio communication system
- 100A: First user equipment
- 100B: Second user equipment
- 331: First reception section
- 332: First information provision section
- 333: First selection section
- 1131: Second reception section
- 1132: Second information provision section
- 1133: Second selection section
- 1430: User equipment
- 1431: Reception section
- 1432: Selection section

## Claims

1. A user apparatus comprising:
reception means for receiving bandwidth information being information related to a bandwidth, from a first base station and a second base station; and
selection means for selecting one of a first mode and a second mode as an operation mode by using the bandwidth information, wherein
the first mode is a mode in which a capability of the user apparatus is limited compared to a capability of a first other user apparatus connecting to the first base station, and
the second mode is a mode in which the capability of the user apparatus is not limited compared to a capability of a second other user apparatus connecting to the second base station.

2. The user apparatus according to claim 1, wherein
the selection means selects the operation mode, based on a result of comparison between the bandwidth indicated by the bandwidth information and a maximum bandwidth supported by the user apparatus.

3. The user apparatus according to claim 2, wherein
the bandwidth information indicates a system bandwidth of the first base station or the second base station.

4. The user apparatus according to claim 3, wherein
the bandwidth information is information related to an initial bandwidth part (initial BWP) included in system information.

5. The user apparatus according to any one of claims 2 to 4, wherein
the reception means
receives the bandwidth information from the first base station in a first frequency band, and
receives the bandwidth information from the second base station in a second frequency band, and
the second frequency band is a frequency band lower than the first frequency band.

6. The user apparatus according to claim 5, wherein
when the bandwidth indicated by the bandwidth information received in the first frequency band is larger than the maximum bandwidth supported by the user apparatus, the selection means selects the first mode as the operation mode.

7. The user apparatus according to claim 5, wherein
when the bandwidth indicated by the bandwidth information received in the second frequency band is not larger than the maximum bandwidth supported by the user apparatus, the selection means selects the second mode as the operation mode.

8. The user apparatus according to any one of claims 5 to 7, wherein
the first frequency band is a Time Division Duplex (TDD) carrier band, and
the second frequency band is a Frequency Division Duplex (FDD) carrier band.

9. The user apparatus according to any one of claims 1 to 8, wherein
the selection means
performs first measurement processing when the selection means selects the first mode as the operation mode, and
performs second measurement processing when the selection means selects the second mode as the operation mode.

10. The user apparatus according to claim 9, wherein
a relaxed measurement criterion in the first measurement processing and a relaxed measurement criterion in the second measurement processing are different from each other.

11. The user apparatus according to claim 9 or 10, wherein
the selection means selects a cell, using a result of the first measurement processing or the second measurement processing.

12. The user apparatus according to claim 11, wherein
a condition for selecting the cell when the operation mode is the first mode and a condition for selecting the cell when the operation mode is the second mode are different from each other.

13. The user apparatus according to claim 11, wherein
the selection means
selects a network slice to be connected by the user apparatus, and
selects the cell supporting the selected network slice.

14. The user apparatus according to claim 13, wherein
the selection means selects a frequency corresponding to the selected network slice, using network slice information, and
the network slice information includes information related to one or more network slices, information related to one or more frequencies respectively corresponding to the one or more network slices, and information indicating whether or not each of the one or more frequencies supports the user apparatus operating in the first mode.

15. The user apparatus according to claim 13 or 14, wherein
the selection means selects the cell supporting the selected network slice, using cell information being information related to a cell supporting a network slice.

16. The user apparatus according to any one of claims 1 to 15, wherein
the first mode is a mode in which a maximum bandwidth supported by the user apparatus is limited compared to a maximum bandwidth supported by the first other user apparatus, and
the second mode is a mode in which the maximum bandwidth supported by the user apparatus is not limited compared to a maximum bandwidth supported by the second other user apparatus.

17. The user apparatus according to any one of claims 1 to 16, wherein
the first mode is a mode in which the user apparatus operates as a Reduced Capability device for the first base station, and
the second mode is a mode in which the user apparatus operates as a non-Reduced Capability device for the second base station.

18. The user apparatus according to any one of claims 1 to 17, wherein
the user apparatus is a Reduced Capability device,
the first other user apparatus is a non-Reduced Capability device connecting to the first base station, and
the second other user apparatus is a non-Reduced Capability device connecting to the second base station.

19. A control method in a user apparatus, the control method comprising:
receiving bandwidth information being information related to a bandwidth, from a first base station and a second base station; and
selecting one of a first mode and a second mode as an operation mode by using the bandwidth information, wherein
the first mode is a mode in which a capability of the user apparatus is limited compared to a capability of a first other user apparatus connecting to the first base station, and
the second mode is a mode in which the capability of the user apparatus is not limited compared to a capability of a second other user apparatus connecting to the second base station.

20. A non-transitory computer-readable recording medium having recorded thereon storing a program causing at least one processor equipped in a user apparatus to execute:
receiving bandwidth information being information related to a bandwidth, from a first base station and a second base station; and
selecting one of a first mode and a second mode as an operation mode by using the bandwidth information, wherein
the first mode is a mode in which a capability of the user apparatus is limited compared to a capability of a first other user apparatus connecting to the first base station, and
the second mode is a mode in which the capability of the user apparatus is not limited compared to a capability of a second other user apparatus connecting to the second base station.

21. A communication system comprising:
a first base station and a second base station each configured to transmit bandwidth information being information related to a bandwidth; and
a user apparatus configured to receive the bandwidth information from the first base station and the second base station, and select one of a first mode and a second mode as an operation mode by using the bandwidth information, wherein
the first mode is a mode in which a capability of the user apparatus is limited compared to a capability of a first other user apparatus connecting to the first base station, and
the second mode is a mode in which the capability of the user apparatus is not limited compared to a capability of a second other user apparatus connecting to the second base station.
